# EUROPÄISCHE PATENTSCHRIFT

(11) **EP 2 864 937 B1**
(45) Veröffentlichungstag und Bekanntmachung des Hinweises auf die Patenterteilung: **15.11.2017**
(21) Anmeldenummer: 13756380.5
(22) Anmeldetag: 26.08.2013
(51) Int. Cl.: G06K 19/077, G06K 7/10, G06Q 30/06

(54) **VORRICHTUNG UND VERFAHREN ZUM VERWALTEN VON DATENSÄTZEN FÜR ZUGEORDNETE SIEGEL VON PRODUKTEN**
DEVICE AND METHOD FOR MANAGING DATASETS FOR CORRESPONDING PRODUCT SEALS
DISPOSITIF ET PROCÉDÉ DE GESTION D'ENREGISTREMENTS DE DONNÉES POUR UN CACHET ASSOCIÉ POUR DES PRODUITS

(30) Priorität: 19.09.2012 DE 102012216764
(43) Veröffentlichungstag der Anmeldung: 29.04.2015
(60) Teilanmeldung: 17000456.8
(73) Patentinhaber: Siemens Aktiengesellschaft, 80333 München (DE)
(72) Erfinder: FALK, Rainer, 85586 Poing (DE); FALK, Thomas, 65451 Kelsterbach (DE)
(86) Internationale Anmeldenummer: PCT/EP2013/067596
(87) Internationale Veröffentlichungsnummer: WO 2014/044492

(56) Entgegenhaltungen:
- DE-A1- 10 328 328
- DE-A1-102005 033 409
- DE-A1-102007 019 839
- US-A- 5 704 097
- US-B2- 6 665 585

## Beschreibung

Die vorliegende Erfindung betrifft eine Vorrichtung und ein Verfahren zum Verwalten von Datensätzen für zugeordnete Siegel von Produkten, wie von Geräten oder Objekten, beispielsweise Flaschen oder Medikamentenverpackungen.

Ein Beispiel für ein Siegel eines Produkts ist ein Sicherheitsetikett. Dabei existieren Sicherheitsetiketten, die nach einem Ablösen als ungültig erkennbar sind, z.B. durch Sichtbarwerden eines "Ungültig"-Schriftzuges oder durch ein Schachbrett- oder Rautenmuster. Ferner ist es bekannt, auf Sicherheitsetiketten einen Code, wie beispielsweise eine Identifizierungsinformation, eine fortlaufende Nummer oder einen Barcode, zu drucken. Allerdings kann hieraus nicht abgelesen werden, ob ein Siegel gebrochen wurde.

Des Weiteren ist bei Getränkeflaschen und Süßwaren bekannt, einen Zutrittscode, beispielsweise ein Passwort bestehend aus Ziffern und Buchstaben, auf ein Etikett oder einen Schraubverschluss aufzudrucken, so dass dieser nur bei geöffneter Verpackung lesbar ist. Dieser muss herkömmlicherweise jedoch von dem Benutzer manuell abgetippt werden, z.B. um Bonusinformationen von einer Website des Herstellers abzurufen. Beispiele für solche Bonusinformationen umfassen Comics oder Klingeltöne.

Ferner ist die Verwendung so genannter PIN-Briefe, z.B. für SIM-Mobilfunk-Chipkarten, bekannt, bei welchen die PIN erst nach einem Freirubbeln oder Abziehen eines Schutzetiketts lesbar ist. Dies dient als Erstöffnungsnachweis, so dass der berechtigte Empfänger und Nutzer prüfen kann, dass nicht schon ein Anderer vor ihm die PIN erhalten hat.

Des Weiteren ist bekannt, bestimmte Informationen, wie z.B. eine URL (Uniform Resource Locator), eine Telefonnummer, eine E-Mail-Adresse oder dergleichen, als einen zweidimensionalen Barcode zu codieren, beispielsweise als Datenmatrix-Code oder als QR-Code (Quick-Response-Code). Ein solcher zweidimensionaler Barcode kann zum Beispiel durch die Kamera eines Mobiltelefons erfasst und decodiert werden. Nach der Decodierung kann beispielsweise die entsprechende URL durch einen Web-Browser des Mobiltelefons geladen und angezeigt werden.

Es ist weiterhin ein elektronischer Produktcode bekannt, um ein Produkt zu identifizieren. Dieser kann als Barcode oder RFID codiert sein. Beispiele hierfür sind Produktcodes auf Medikamentenverpackungen.

Weiterhin ist die Patentanmeldung DE 10 2005 033409 A1 die ein konventionelles Verfahren zum Erkennen gefälschter Markenprodukte offenbart.

Allerdings ist für den Nutzer eines solchen Produktes mit einem Siegel nicht sichergestellt, dass er das Siegel erstmalig bricht. Insgesamt ist das Öffnen oder Brechen eines Siegels für ein Produkt herkömmlicherweise nicht automatisiert und zuverlässig erfassbar sowie durch eine vertrauenswürdige Instanz verifizierbar.

Demzufolge ist es eine Aufgabe der vorliegenden Erfindung, obige Nachteile zu überwinden.

Demgemäß wird eine Vorrichtung zum Verwalten von N Datensätzen von N zugeordneten Siegeln für Produkte vorgeschlagen. Dabei umfasst das jeweilige Siegel einen dem Siegel zugeordneten und nach einem Brechen des Siegels durch ein Erfassungsgerät erfassbaren Code. Die Vorrichtung weist eine Empfangseinheit, eine Prüfeinheit und eine Sendeeinheit auf. Die Empfangseinheit ist zum Empfangen einer von einem Erfassungsgerät gesendeten Anfragenachricht mit einem einem
der N Siegel zugeordneten Code eingerichtet. Die Prüfeinheit ist zum Prüfen des empfangenen Codes auf Gültigkeit und auf ein erstmaliges Brechen des dem empfangenen Code zugeordneten Siegels in Abhängigkeit von dem dem zugeordneten Siegel zugeordneten Datensatz eingerichtet. Die Sendeeinheit ist zum Senden einer
in Abhängigkeit von dem Prüfen generierten Antwortnachricht mit einer Statusinformation zum erstmaligen Brechen des dem empfangenen Code zugeordneten Siegels an das Erfassungsgerät eingerichtet.

Erfindungsgemäß wird dem Erfassungsgerät die Antwortnachricht mit der Statusinformation zum erstmaligen Brechen des Siegels übermittelt. Somit ist der Nutzer des Erfassungsgerätes durch die Statusinformation darüber informiert, ob das Siegel erstmalig oder nicht erstmalig gebrochen ist.

Vorteilhafterweise ist die Vorrichtung dazu eingerichtet, die Mehrzahl N von Datensätzen für eine entsprechende Mehrzahl N von Siegeln zu verwalten. Die Vorrichtung ist insbesondere eine vertrauenswürdige Instanz und kann auch als Siegel-Server bezeichnet werden.

Das Siegel kann auch als ein Sicherheitsetikett bezeichnet werden. Das Produkt kann als Getränkeflasche, Medikamentenverpackung, Sicherheitslabel oder als ein Objekt, wie beispielsweise ein Halbleiterbaustein, ein Sensorknoten, ein Steuergerät, eine Batterie oder ein Toner ausgebildet sein.

Der Code kann auch als Siegelbruchcode bezeichnet werden. Das Erfassungsgerät ist beispielsweise ein Mobiltelefon oder ein Smartphone mit integrierter Kamera.

Das Siegel umfasst ein schützendes oder verdeckendes Element, welches zu entfernen ist, dass der Code erfassbar oder zugänglich ist. Folglich ist ein physikalischer Schutz zu überwinden, um den Code oder Siegelbruchcode zu erfassen. Der Siegelbruchcode befindet sich beispielsweise im Inneren des Produktes, beispielsweise einer Verpackung, z.B. auf einer Innenseite aufgedruckt auf einem Beipackzettel oder dem sich im Inneren der Verpackung befindenden Produktes, wie z.B. ein Medikamenten-Blister oder ein Medikamentenfläschchen, so dass der Code erst nach einem Öffnen der Verpackung zugänglich und damit erfassbar ist. Alternativ ist der Siegelbruchcode durch ein Etikett oder eine ähnliche abdeckende Schutzschicht zumindest teilweise verdeckt, so dass er erst nach Abrubbeln der Schutzschicht oder nach Abziehen des Etiketts erfassbar ist.

Bei einer Ausführungsform ist die Prüfeinheit dazu eingerichtet, den dem empfangenen Code zugeordneten Datensatz in Abhängigkeit von der empfangenen Anfragenachricht zu aktualisieren.

Der zugeordnete Datensatz wird vorteilhafterweise in Abhängigkeit der empfangenen Anfragenachricht aktualisiert. Eine einfache Ausgestaltung kann darin bestehen, dass ein Statusflag zum erstmaligen Brechen des zugeordneten Siegels des Datensatzes entsprechend gesetzt oder aktualisiert wird. D.h., wenn der dem jeweiligen Datensatz zugeordnete Code erstmalig empfangen wird, ändert sich das Statusflag des zugeordneten Datensatzes.

Bei einer weiteren Ausführungsform umfasst die Anfragenachricht einen Zeitstempel, wobei die Prüfeinheit dazu eingerichtet ist, den empfangenen Zeitstempel dem dem empfangenen Code zugeordneten Datensatz zur Angabe eines Zeitpunktes des Brechens des zugeordneten Siegels hinzuzufügen.

Somit kann der Zeitpunkt des erstmaligen Brechens des zugeordneten Siegels gespeichert, verwaltet und für spätere Anwendungen bereitgestellt werden. Damit geht die Erstbenutzung des Produkts einher. Ferner kann hierdurch eine Nutzungsdauer verwaltet werden.

Bei einer weiteren Ausführungsform umfasst die Anfragenachricht einen Zeitstempel. Hierbei ist die Prüfeinheit zum Vergleichen des empfangenen Zeitstempels mit einem in dem zugeordneten Datensatz gespeicherten Ablaufdatum für das Produkt eingerichtet, wobei die Sendeeinheit zum Senden einer in Abhängigkeit von dem Prüfen und dem Vergleichen generierten Antwortnachricht mit der Statusinformation zum erstmaligen Brechen des dem empfangenen Code zugeordneten Siegels und einer Haltbarkeitsinformation für das Produkt des zugeordneten Siegels eingerichtet ist.

Durch die Haltbarkeitsinformation kann sichergestellt werden, dass der Nutzer nur haltbare Produkte konsumiert. Somit kann verfolgt werden, ob die Erstöffnung nicht schon zu lange zurückliegt und das Produkt daher zu entsorgen ist. Insbesondere bei Medikamenten ist dies sehr vorteilhaft.

Bei einer weiteren Ausführungsform umfasst der jeweilige Datensatz für das jeweilige Siegel ein Statusflag, welches einen ungebrochenen Zustand des Siegels indiziert.

Die Verwendung des Statusflag ist eine sehr einfache Ausgestaltungsform, den ungebrochenen Zustand des Siegels und in seiner invertierten Version auch den gebrochenen Zustand des Siegels zu signalisieren.

Bei einer weiteren Ausführungsform umfasst der jeweilige Datensatz für das jeweilige Siegel eine Anzahl M von Identifikationen von M berechtigten Erfassungsgeräten.

Für das jeweilige Siegel kann eine Anzahl M von berechtigten Erfassungsgeräten verwaltet werden. Die Anzahl M kann für die verschiedenen Siegel unterschiedlich sein.

Bei einer weiteren Ausführungsform ist die Prüfeinheit zum Prüfen des empfangenen Codes auf Gültigkeit und auf das erstmalige Brechen des dem empfangenen Code zugeordneten Siegels und zum Abgleichen einer mit der Anfragenachricht empfangenen Identität des Erfassungsgerätes mit den in dem zugeordneten Datensatz gespeicherten Identifikationen der berechtigten Erfassungsgeräte eingerichtet.

Somit ist sichergestellt, dass nur berechtigte Erfassungsgeräte tatsächlich eine Antwortnachricht von der Vorrichtung erhalten. Alternativ kann die Vorrichtung unberechtigten Erfassungsgeräten auch eine negative Antwortnachricht übermitteln. Durch die Verwendung der Identifikation kann auch der jeweilige Nutzer dem Produkt bzw. dem Siegel zugeordnet werden. Dadurch ist bekannt, wer das Siegel geöffnet bzw. gebrochen hat.

Bei einer weiteren Ausführungsform ist die Empfangseinheit zum Empfangen einer Anfragenachricht mit dem einem der N Siegel zugeordneten Code und mit einer Prüfsumme von dem Erfassungsgerät eingerichtet. Hierbei ist die Prüfeinheit zum Prüfen des empfangenen Codes auf Gültigkeit und auf das erstmalige Brechen des dem empfangene Code zugeordneten Siegels und der Prüfsumme auf Korrektheit in Abhängigkeit von dem dem zugeordneten Siegel zugeordneten und in dem Speicher gespeicherten Datensatz eingerichtet. Ferner ist die Sendeeinheit zum Senden einer in Abhängigkeit von dem Prüfen des empfangenen Codes auf Gültigkeit und auf das erstmalige Brechen und der empfangenen Prüfsumme auf Korrektheit generierten Antwortnachricht mit der Statusinformation an das Erfassungsgerät eingerichtet.

Die Vorrichtung aktualisiert nur dann den zugeordneten Datensatz, wenn eine korrekte Prüfsumme in der Anfragenachricht enthalten ist. Die Prüfsumme dient dabei vorzugsweise als Passwort oder Zugriffscode, um ein Siegel als tatsächlich geöffnet nachzuweisen. Dadurch kann ein dem Siegel zugeordneter Datensatz nicht als geöffnet aktualisiert werden, wenn nicht die dafür erforderliche, in dem zugeordneten Code enthaltene Prüfsumme in der Anfragenachricht enthalten war.

Bei einer weiteren Ausführungsform umfasst der Code einen Barcode, einen QR-Code, eine Internet-Adresse der Vorrichtung zum Verwalten der Mehrzahl N der Siegel und/oder eine Zugangsinformation für die Vorrichtung zum Verwalten der Mehrzahl N der Siegel.

Der QR-Code (Quick-Response-Code) ist ein zweidimensionaler Code. Der QR-Code kann auch als Mikro-QR-Code, als Secure-QR-Code oder als iQR-Code ausgestaltet sein.

Bei einer weiteren Ausführungsform ist die Sendeeinheit dazu eingerichtet, der Antwortnachricht eine Produktbeschreibung des dem empfangenen Code zugeordneten Produktes oder einen Link auf einen Server zur Bereitstellung der Produktbeschreibung hinzuzufügen. Durch die Produktbeschreibung können dem Nutzer auf einfache Weise aktuelle Informationen zu dem Produkt bereitgestellt werden.

Die jeweilige Einheit, Empfangseinheit, Prüfeinheit und Sendeeinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Bei einer weiteren Ausführungsform ist die Vorrichtung als ein HTTP-fähiger Server ausgebildet.

Bei einer weiteren Ausführungsform weist die Vorrichtung einen Speicher zum Speichern der N Datensätze auf, welche den N Siegeln zugeordnet sind.

Weiter wird ein System mit einer wie oben beschriebenen Vorrichtung zum Verwalten von N Datensätzen von N zugeordneten Siegeln für Produkte und einer Anzahl von mit der Vorrichtung koppelbaren Erfassungsgeräten zum Erfassen der Codes der N Siegel vorgeschlagen.

Ferner wird ein Verfahren zum Verwalten von N Datensätzen von N zugeordneten Siegeln für Produkte vorgeschlagen. Dabei umfasst das jeweilige Siegel einen dem Siegel zugeordneten und nach einem Brechen des Siegels durch ein Erfassungsgerät erfassbaren Code. In einem ersten Schritt wird eine von einem Erfassungsgerät gesendete Anfragenachricht mit einem einem der N Siegel zugeordneten Code empfangen. In einem zweiten Schritt wird der empfangene Code auf Gültigkeit und auf ein erstmaliges Brechen des dem empfangenen Code zugeordneten Siegels in Abhängigkeit von dem dem zugeordneten Siegel zugeordneten Datensatz geprüft. In einem dritten Schritt wird eine in Abhängigkeit von dem Prüfen generierte Antwortnachricht mit einer Statusinformation zum erstmaligen Brechen des dem empfangenen Code zugeordneten Siegels an das Erfassungsgerät gesendet.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Außerdem wird ein Datenträger mit einem gespeicherten Computerprogramm mit Befehlen vorgeschlagen, welche die Durchführung des wie oben erläuterten Verfahrens auf einer programmgesteuerten Einrichtung veranlasst.

Ferner wird ein Siegel vorgeschlagen, welches von der oben näher erläuterten Vorrichtung verwaltet werden kann. Das Siegel kann neben dem oben beschriebenen Code auch einen weiteren Code umfassen, der bei einem nicht geöffneten Siegel durch das Erfassungsgerät erfassbar ist. Dieser weitere Code kann beispielsweise nur bei einem nicht geöffneten Siegel erfassbar sein, d.h. er wird beim Öffnen oder Brechen des Siegels zerstört, so dass er durch das Erfassungsgerät nicht mehr erfassbar ist und nicht als gültiger Code erkannt wird.

In einer alternativen Variante ist der weitere Code auch bei einem geöffneten Siegel erfassbar, d.h. er dient der Siegelidentifizierung, unabhängig vom Zustand verschlossen oder geöffnet. Durch diesen weiteren Code kann das Produkt per Trace & Track verfolgt werden, z.B. eine Medikamentenverpackung entlang einer Lieferkette. Nach einem Übertragen des Siegelbruchcodes ist anhand des weiteren Codes abfragbar, dass die Verpackung bereits geöffnet war.

In einer Ausführungsform ist durch den Siegelbruchcode eine Information abrufbar, z.B. eine Produktbeschreibung. Dies ist in einer Variante nur dann möglich, wenn der Siegelbruchcode aktiviert geschaltet wurde, nachdem das Produkt des außen frei zugänglichen weiteren Codes durch eine berechtigte Ausgabestelle freigeschaltet wurde. Somit kann unabhängig davon, ob das Produkt von einer berechtigten, zugelassenen Ausgabestelle ausgegeben wurde, dem Nutzer seine angepasste Information angezeigt werden, z.B. auch ein Warnhinweis.

Bei der Verwendung des Siegelbruchcodes und des weiteren Codes kann als verdeckendes Element für den Siegelbruchcode ein abziehbares Etikett eingesetzt werden, welches transparent oder teilweise transparent ist, so dass ein Teil des unter dem Etikett liegenden Siegelbruchcodes auch bei vorhandenem aufgebrachten Etikett erfassbar ist.

Das Aktualisieren des dem Siegelbruch zugeordneten Datensatzes kann weiterhin dazu führen, dass für den weiteren Code eine modifizierte Information bereitgestellt wird (zum Beispiel als ungültig gekennzeichnet wird; Zugriff unterbunden wird; oder ein erweiterter Zugriff freigeschaltet wird). Das heißt, die Antwort auf eine Anfragenachricht, die den weiteren Code enthält, ist insbesondere davon abhängig, ob der Siegelbruch-Code bereits zumindest einmal an die Vorrichtung übertragen wurde.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein Blockschaltbild eines Ausführungsbeispiels einer Vorrichtung zum Verwalten von Datensätzen für zugeordnete Siegel von Produkten;
- Fig. 2: ein Ablaufdiagramm eines ersten Ausführungsbeispiels eines Verfahrens zum Verwalten von Datensätzen für zugeordnete Siegel von Produkten; und
- Fig. 3: ein Ablaufdiagramm eines zweiten Ausführungsbeispiels eines Verfahrens zum Verwalten von Datensätzen für zugeordnete Siegel von Produkten.

In den Figuren sind gleiche oder funktionsgleiche Elemente mit denselben Bezugszeichen versehen worden, sofern nichts anderes angegeben ist.

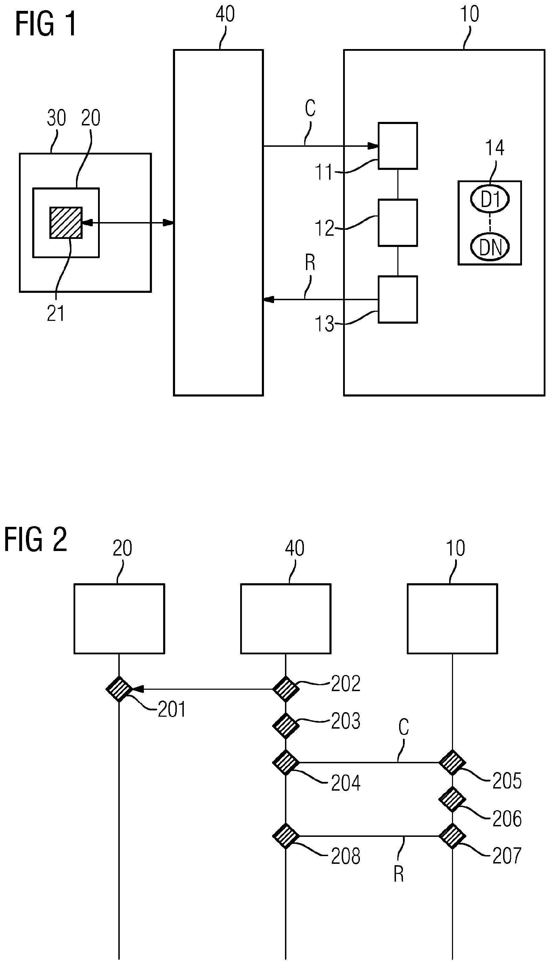

Fig. 1 zeigt ein Blockschaltbild eines ersten Ausführungsbeispiels einer Vorrichtung 10 zum Verwalten von Datensätzen D1-DN für zugeordnete Siegel 20 von Produkten 30. Das in Fig. 1 gezeigte Produkt 30 ist mit einem Siegel 20 mit einem Code 21 ausgestattet, welcher erst nach einem Brechen des Siegels 20 durch ein Erfassungsgerät 40 erfassbar ist.

Dem jeweiligen Siegel 20 ist ein Code 21 und ein entsprechender auf der Vorrichtung 10 gespeicherter Datensatz D1-DN zugeordnet. Die Vorrichtung 10 ist beispielsweise als ein HTTP-fähiger Server ausgebildet, welcher einen Speicher 14 zum Speichern der N den N zugeordneten Siegeln 20 zugeordneten Datensätzen D1-DN umfasst.

Beispielsweise ist dem Code 21 des Siegels 20 der Fig. 1 der Datensatz D1 der Vorrichtung 10 zugeordnet. Die Vorrichtung 10 verwaltet N Datensätze D1-DN. Dazu weist die Vorrichtung 10 einen Speicher 14 auf, welcher die N Datensätze D1-DN speichert.

Die Vorrichtung 10 weist eine Empfangseinheit 11, eine Prüfeinheit 12 und eine Sendeeinheit 13 auf. Die Empfangseinheit 11 ist dazu eingerichtet, eine von dem Erfassungsgerät 40 gesendete Anfragenachricht C mit dem dem Siegel 20 zugeordneten Code 21 zu empfangen.

D.h., nach dem Brechen des Siegels 20 des Produktes 30 ist der Code 21 für das Erfassungsgerät 40 erfassbar. Nach dem Brechen des Siegels 20 kann das Erfassungsgerät 40 den Code 21 erfassen und eine Anfragenachricht C generieren, welche den zugeordneten Code 21 umfasst. Der Code 21 kann ein Barcode, ein QR-Code, eine Internet-Adresse der Vorrichtung 10 und/oder eine Zugangsinformation für die Vorrichtung 10 umfassen. Die Anfragenachricht C kann mit einer darauf folgenden Antwortnachricht R eine Anfrage-Antwort-Authentisierung ausbilden (Challenge-Response-Authentication). Insbesondere kann die Anfragenachricht C einen Zeitstempel umfassen.

Die Empfangseinheit 11 leitet die empfangene Anfragenachricht C an die Prüfeinheit 12 weiter. Die Prüfeinheit 12 ist zum Prüfen des empfangenen Codes 21 auf Gültigkeit und auf ein erstmaliges Brechen des dem empfangenen Code 21 zugeordneten Siegels 20 in Abhängigkeit von dem dem zugeordneten Siegel 20 zugeordneten Datensatz D1-DN eingerichtet. Dazu lädt die Prüfeinheit 12 den zugeordneten Datensatz D1-DN von dem Speicher 14. Ferner kann die Prüfeinheit 12 auch dazu eingerichtet sein, den entsprechenden Datensatz D1-DN in Abhängigkeit von der empfangenen Anfragenachricht C zu aktualisieren.

In dem Beispiel, dass die Anfragenachricht C einen Zeitstempel umfasst, kann die Prüfeinheit 12 dazu eingerichtet werden, den empfangenen Zeitstempel dem entsprechenden Datensatz D1-DN zur Angabe des Zeitpunkts des ersten Brechens des zugeordneten Siegels 20 hinzuzufügen.

Die mit der Prüfeinheit 12 gekoppelte Sendeeinheit 13 ist dazu eingerichtet, eine in Abhängigkeit von dem Prüfen generierte Antwortnachricht R mit einer Statusinformation zum erstmaligen Brechen des dem empfangenen Code 21 zugeordneten Siegels 20 an das Erfassungsgerät 40 zu senden. Damit empfängt der Nutzer des Erfassungsgeräts 40 eine Statusinformation darüber, ob der von dem Erfassungsgerät 40 ausgesendete Code 21 bereits benutzt war, und damit, ob das Siegel 20 erstmalig gebrochen war.

Ferner ist die Sendeeinheit 13 insbesondere dazu eingerichtet, der Antwortnachricht R eine Produktbeschreibung des dem empfangenen Code 21 zugeordneten Produktes 30 hinzuzufügen. Alternativ kann der Antwortnachricht R auch ein Link auf einen Server zur Bereitstellung der Produktbeschreibung hinzugefügt werden.

Für das obige Beispiel, dass die Anfragenachricht C einen Zeitstempel umfasst, kann die Prüfeinheit 12 den empfangenen Zeitstempel auch mit einem in dem zugeordneten Datensatz D1-DN gespeicherten Ablaufdatum für das Produkt 30 vergleichen. In diesem Beispiel kann die Sendeeinheit 13 dazu eingerichtet werden, die Antwortnachricht R in Abhängigkeit von dem Prüfen und dem Vergleichen zu generieren. Die Antwortnachricht R umfasst dann die Statusinformation zum erstmaligen Brechen des dem empfangenen Codes 21 zugeordneten Siegels 20 sowie eine Haltbarkeitsinformation für das Produkt 30 des zugeordneten Siegels 20. Die Haltbarkeitsinformation kann angeben, ob ein vorbestimmtes Mindesthaltbarkeitsdatum des Produktes 30 abgelaufen ist oder nicht.

Der jeweilige Datensatz D1-DN für das jeweilige Siegel 20 umfasst vorzugsweise ein Statusflag, welches indiziert, ob das Siegel 20 gebrochen ist oder nicht. Des Weiteren kann der jeweilige Datensatz D1-DN für das jeweilige Siegel 20 eine Anzahl M von Identifikationen von M berechtigten Erfassungsgeräten 40 umfassen. In diesem Fall kann die Prüfeinheit 12 dazu eingerichtet werden, nicht nur die Gültigkeit des empfangenen Codes 21 und das erstmalige Brechen des dem empfangenen Code 21 zugeordneten Siegels 20 zu prüfen, sondern auch dazu, eine mit der Anfragenachricht C empfangene Identität des anfragenden Erfassungsgerätes 40 mit den in dem zugeordneten Datensatz D1-DN gespeicherten Identifikationen der berechtigten Erfassungsgeräte 40 abzugleichen. Nur bei einem positiven Abgleich wird dann die Sendeeinrichtung 13 die Antwortnachricht R generieren und an das anfragende Erfassungsgerät 40 übertragen.

In einem weiteren Beispiel umfasst die Anfragenachricht C nicht nur den dem einen der N Siegel 20 zugeordneten Code 21, sondern auch eine Prüfsumme. Dann kann die Prüfeinheit 12 dazu eingerichtet werden, den empfangenen Code 21 auf Gültigkeit und auf das erstmalige Brechen des dem empfangenen Code 21 zugeordneten Siegels 20 sowie die Prüfsumme auf Korrektheit in Abhängigkeit von dem dem zugeordneten Siegel 20 zugeordneten Datensatz D1-DN zu prüfen. In diesem Beispiel wird dann die Sendeeinheit 13 dazu eingerichtet, eine in Abhängigkeit von dem Prüfen des empfangenen Codes 21 auf Gültigkeit und auf das erstmalige Brechen und der empfangenen Prüfsumme auf Korrektheit generierte Antwortnachricht R mit der Statusinformation an das Erfassungsgerät 40 zu senden.

Fig. 2 zeigt ein Ablaufdiagramm eines ersten Ausführungsbeispiels eines Verfahrens zum Verwalten von Datensätzen D1-DN für zugeordnete Siegel 20 von Produkten 30.

Das Beispiel der Fig. 2 umfasst die Schritte 201-208, welche das Siegel 20, das Erfassungsgerät 40 und die Vorrichtung 10 betreffen. Ein Beispiel für die Vorrichtung 10 ist in Fig. 1 dargestellt.

In Schritt 201 wird das Siegel 20 gebrochen, so dass der Code 21 durch das Erfassungsgerät 40 erfassbar ist. In Schritt 202 wird das Brechen des Siegels 20 durch das Erfassungsgerät 40 detektiert.

Daraufhin wird in Schritt 203 eine Anfragenachricht C durch das Erfassungsgerät 40 generiert, welche den erfassten Code 21 umfasst. In Schritt 204 wird die generierte Anfragenachricht C an die Vorrichtung 10 übermittelt. In Schritt 205 empfängt die Vorrichtung 10 die übermittelte Anfragenachricht C. In Schritt 206 wird der Code 21 der empfangenen Anfragenachricht C auf Gültigkeit und auf ein erstmaliges Brechen des dem empfangenen Code 21 zugeordneten Siegels 20 in Abhängigkeit von dem dem zugeordneten Siegel 20 zugeordneten Datensatz D1-DN geprüft.

In Schritt 206 wird in Abhängigkeit von dem Prüfen eine Antwortnachricht R generiert, welche in Schritt 207 von der Vorrichtung 10 an das Erfassungsgerät 40 übermittelt wird. In Schritt 208 empfängt das Erfassungsgerät 40 die gesendete Antwortnachricht R. Somit erhält der Nutzer des Erfassungsgeräts 40 eine Statusinformation über das erstmalige Brechen des dem empfangenen Code 21 zugeordneten Siegels 20.

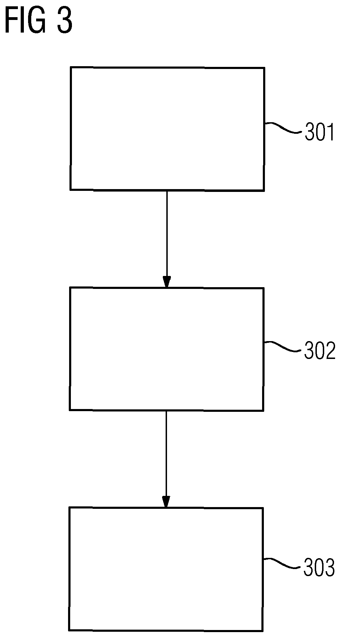

In Fig. 3 ist ein Ablaufdiagramm eines zweiten Ausführungsbeispiels eines Verfahrens zum Verwalten von Datensätzen D1-DN für zugeordnete Siegel 20 von Produkten 30 dargestellt. Das Verfahren der Fig. 3 wird insbesondere durch eine Vorrichtung 10 der Fig. 1 durchgeführt. Das jeweilige Siegel 20 umfasst einen dem Siegel 20 zugeordneten und nach einem Brechen des Siegels 20 durch ein Erfassungsgerät 40 erfassbaren Code 21.

Das Ausführungsbeispiel der Fig. 3 umfasst die folgenden Schritte 301-303:
In Schritt 301 wird eine von einem Erfassungsgerät 40 gesendete Anfragenachricht C von der Vorrichtung 10 empfangen. Die Anfragenachricht C umfasst einen Code 21, der einem der N Siegel 20 zugeordnet ist.
In Schritt 302 wird der empfangene Code 21 auf Gültigkeit und auf ein erstmaliges Brechen des dem empfangenen Code 21 zugeordneten Siegels 20 geprüft. Das Prüfen erfolgt in Abhängigkeit von dem dem zugeordneten Siegel 20 zugeordneten Datensatz D1-DN.
In Schritt 303 wird eine in Abhängigkeit von dem Prüfen generierte Antwortnachricht R an das Erfassungsgerät 40 gesendet. Die Antwortnachricht R umfasst eine Statusinformation zum erstmaligen Brechen des dem empfangenen Code 21 zugeordneten Siegels.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (10) zum Verwalten von N Datensätzen (D1, ..., DN) für N zugeordnete Siegel (20) von Produkten (30), wobei das jeweilige Siegel (20) einen dem Siegel (20) zugeordneten und nach einem Brechen des Siegels (20) durch ein Erfassungsgerät (40) erfassbaren Code (21) umfasst, mit:
einer Empfangseinheit (11) zum Empfangen einer von einem Erfassungsgerät (40) gesendeten Anfragenachricht (C) mit einem der N Siegel (20) zugeordneten Code (21),
einer Prüfeinheit (12) zum Prüfen des empfangenen Codes (21) auf Gültigkeit und auf ein erstmaliges Brechen des dem empfangenen Code (21) zugeordneten Siegels (20) in Abhängigkeit von dem dem zugeordneten Siegel (20) zugeordneten Datensatz (D1, ..., DN), und
einer Sendeeinheit (13) zum Senden einer in Abhängigkeit von dem Prüfen generierten Antwortnachricht (R) mit einer Statusinformation zum erstmaligen Brechen des dem empfangenen Code (21) zugeordneten Siegels (20) an das Erfassungsgerät (40),
**dadurch gekennzeichnet,**
**dass** der jeweilige Datensatz (D1, ..., DN) für das jeweilige Siegel (20) eine Anzahl M von Identifikationen von M berechtigten Erfassungsgeräten (40) umfasst, wobei die Prüfeinheit (12) zum Prüfen des empfangenen Codes (21) auf Gültigkeit und auf das erstmalige Brechen des dem empfangenen Code (21) zugeordneten Siegels (20) und zum Abgleichen einer mit der Anfragenachricht (C) empfangenen Identität des Erfassungsgerätes (40) mit den in dem zugeordneten Datensatz (D1, ..., DN) gespeicherten Identifikationen der berechtigten Erfassungsgeräte (40) eingerichtet ist.

2. Vorrichtung nach Anspruch 1,
**dadurch gekennzeichnet,**
**dass** die Prüfeinheit (12) dazu eingerichtet ist, den dem empfangenen Code (21) zugeordneten Datensatz (D1, ..., DN) in Abhängigkeit von der empfangenen Anfragenachricht (C) zu aktualisieren.

3. Vorrichtung nach Anspruch 1 oder 2,
**dadurch gekennzeichnet,**
**dass** die Anfragenachricht (C) einen Zeitstempel umfasst, wobei die Prüfeinheit (12) dazu eingerichtet ist, den empfangenen Zeitstempel dem dem empfangenen Code (21) zugeordneten Datensatz (D1, ..., DN) zur Angabe eines Zeitpunktes des Brechens des zugeordneten Siegels (20) hinzuzufügen.

4. Vorrichtung nach einem der Ansprüche 1 bis 3,
**dadurch gekennzeichnet,**
**dass** die Anfragenachricht (C) einen Zeitstempel umfasst, wobei die Prüfeinheit (12) zum Vergleichen des empfangenen Zeitstempels mit einem in dem zugeordneten Datensatz (D1, ..., DN) gespeicherten Ablaufdatum für das Produkt (30) eingerichtet ist, wobei die Sendeeinheit (13) zum Senden einer in Abhängigkeit von dem Prüfen und dem Vergleichen generierten Antwortnachricht (R) mit der Statusinformation zum erstmaligen Brechen des dem empfangenen Code (21) zugeordneten Siegels (20) und einer Haltbarkeitsinformation für das Produkt (30) des zugeordneten Siegels (20) eingerichtet ist.

5. Vorrichtung nach einem der Ansprüche 1 bis 4,
**dadurch gekennzeichnet,**
**dass** der jeweilige Datensatz (D1, ..., DN) für das jeweilige Siegel (20) ein Statusflag umfasst, welches einen ungebrochenen Zustand des Siegels (20) indiziert.

6. Vorrichtung nach Anspruch 1,
**dadurch gekennzeichnet,**
**dass** die Sendeeinheit (13) zum Senden einer in Abhängigkeit von dem Prüfen und dem Abgleichen generierten Antwortnachricht (R) mit der Statusinformation zum erstmaligen Brechen des dem empfangenen Code (21) zugeordneten Siegels (20) an das Erfassungsgerät (40) eingerichtet ist.

7. Vorrichtung nach einem der Ansprüche 1 bis 6,
**dadurch gekennzeichnet,**
**dass** die Empfangseinheit (11) zum Empfangen einer Anfragenachricht (C) mit dem einem der N Siegel (20) zugeordneten Code (21) und mit einer Prüfsumme von dem Erfassungsgerät (40) eingerichtet ist,
**dass** die Prüfeinheit (12) zum Prüfen des empfangenen Codes (21) auf Gültigkeit und auf das erstmalige Brechen des dem empfangenen Code zugeordneten Siegels (20) und der Prüfsumme auf Korrektheit in Abhängigkeit von dem dem zugeordneten Siegel (20) zugeordneten Datensatz (D1, ..., DN) eingerichtet ist, und
**dass** die Sendeeinheit (13) zum Senden einer in Abhängigkeit von dem Prüfen des empfangenen Codes (21) auf Gültigkeit und auf das erstmalige Brechen und der empfangenen Prüfsumme auf Korrektheit generierten Antwortnachricht (R) mit der Statusinformation an das Erfassungsgerät (40) eingerichtet ist.

8. Vorrichtung nach einem der Ansprüche 1 bis 7,
**dadurch gekennzeichnet,**
**dass** der Code (21) einen Barcode, einen QR-Code, eine Internet-Adresse der Vorrichtung (10) zum Verwalten der Mehrzahl N der Siegel (20) und/oder eine Zugangsinformation für die Vorrichtung (10) zum Verwalten der Mehrzahl N der Siegel (20) umfasst.

9. Vorrichtung nach einem der Ansprüche 1 bis 8,
**dadurch gekennzeichnet,**
**dass** die Sendeeinheit (13) dazu eingerichtet ist, der Antwortnachricht (R) eine Produktbeschreibung des dem empfangenen Code (21) zugeordneten Produktes (30) oder einen Link auf einen Server zur Bereitstellung der Produktbeschreibung (30) hinzuzufügen.

10. Vorrichtung nach einem der Ansprüche 1 bis 9,
**dadurch gekennzeichnet,**
**dass** die Vorrichtung (10) als ein HTTP-fähiger Server ausgebildet ist, welcher einer Speicher (14) zum Speichern der N den N zugeordneten Siegeln (20) zugeordneten Datensätzen (D1, ..., DN) aufweist.

11. System, mit
einer Vorrichtung (10) zum Verwalten von N Datensätzen (D1, ..., DN) für N zugeordnete Siegel (20) von Produkten (30) nach einem der Ansprüche 1 bis 12, wobei das jeweilige Siegel (20) einen dem Siegel (20) zugeordneten und nach einem Brechen des Siegels (20) durch ein Erfassungsgerät (40) erfassbaren Code (21) umfasst, und
einer Anzahl von mit der Vorrichtung (10) koppelbaren Erfassungsgeräten (40) zum Erfassen der Codes (21) der N Siegel (20).

12. Verfahren zum Verwalten von N Datensätzen (D1, ..., DN) für N zugeordnete Siegel (20) von Produkten (30), wobei das jeweilige Siegel (20) einen dem Siegel (20) zugeordneten und nach einem Brechen des Siegels (20) durch ein Erfassungsgerät (40) erfassbaren Code umfasst, mit den Schritten:
Empfangen (301) einer von einem Erfassungsgerät (40) gesendeten Anfragenachricht (C) mit einem der N Siegel (20) zugeordneten Code,
Prüfen (302) des empfangenen Codes (21) auf Gültigkeit und auf ein erstmaligen Brechen des dem empfangenen Code (21) zugeordneten Siegels (20) in Abhängigkeit von dem dem zugeordneten Siegel (20) zugeordneten Datensatz (D1, ..., DN), und
Senden (303) einer in Abhängigkeit von dem Prüfen generierte Antwortnachricht (R) mit einer Statusinformation zum erstmaligen Brechen des dem empfangenen Code (21) zugeordneten Siegels (20) an das Erfassungsgerät (40)
**dadurch gekennzeichnet,**
**dass** der jeweilige Datensatz (D1, ..., DN) für das jeweilige Siegel (20) eine Anzahl M von Identifikationen von M berechtigten Erfassungsgeräten (40) umfasst, wobei die Prüfeinheit (12) zum Prüfen des empfangenen Codes (21) auf Gültigkeit und auf das erstmalige Brechen des dem empfangenen Code (21) zugeordneten Siegels (20) und zum Abgleichen einer mit der Anfragenachricht (C) empfangenen Identität des Erfassungsgerätes (40) mit den in dem zugeordneten Datensatz (D1, ..., DN) gespeicherten Identifikationen der berechtigten Erfassungsgeräte (40) eingerichtet ist.

13. Computerprogrammprodukt, welches auf einer programmgesteuerten Einrichtung die Durchführung eines Verfahrens nach Anspruch 12 veranlasst.

## Claims

1. Apparatus (10) for managing N data records (D1, ..., DN) for N associated seals (20) from products (30), wherein the respective seal (20) comprises a code (21) that is associated with the seal (20) and that is capturable by a capture appliance (40) after the seal (20) is broken, having:
a reception unit (11) for receiving a challenge message (C), sent by a capture appliance (40), with a code (21) associated with one of the N seals (20),
a checking unit (12) for checking the received code (21) for validity and for first breakage of the seal (20) associated with the received code (21) on the basis of the data record (D1, ..., DN) associated with the associated seal (20), and
a transmission unit (13) for sending a response message (R), generated on the basis of the check, with a piece of status information pertaining to the first breakage of the seal (20) associated with the received code (21) to the capture appliance (40),
**characterized**
**in that** the respective data record (D1, ..., DN) for the respective seal (20) comprises a number M of identifications from M authorized capture appliances (40)
wherein the checking unit (12) is set up to check the received code (21) for validity and for the first breakage of the seal (20) associated with the received code (21) and to check consistency between an identity of the capture appliance (40) that is received with the challenge message (C) and the identifications of the authorized capture appliances (40), which identifications are stored in the associated data record (D1, ..., DN).

2. Apparatus according to Claim 1,
**characterized**
**in that** the checking unit (12) is set up to update the data record (D1, ..., DN) associated with the received code (21) on the basis of the received challenge message (C).

3. Apparatus according to Claim 1 or 2,
**characterized**
**in that** the challenge message (C) comprises a timestamp, wherein the checking unit (12) is set up to add the received timestamp to the data record (D1, ..., DN) associated with the received code (21) in order to indicate a time of breakage of the associated seal (20).

4. Apparatus according to one of Claims 1 to 3,
**characterized**
**in that** the challenge message (C) comprises a timestamp, wherein the checking unit (12) is set up to compare the received timestamp with an expiry date for the product (30), which expiry date is stored in the associated data record (D1, ... DN), wherein the transmission unit (13) is set up to send a response message (R), generated on the basis of the check and the comparison, with the piece of status information pertaining to the first breakage of the seal (20) associated with the received code (21) and a piece of shelf-life information for the product (30) from the associated seal (20).

5. Apparatus according to one of Claims 1 to 4,
**characterized**
**in that** the respective data record (D1, ... DN) for the respective seal (20) comprises a status flag that indicates an unbroken state of the seal (20).

6. Apparatus according to Claim 1,
**characterized**
**in that** the transmission unit (13) is set up to send a response message (R), generated on the basis of the check and the consistency check, with the piece of status information pertaining to the first breakage of the seal (20) associated with the received code (21) to the capture appliance (40).

7. Apparatus according to one of Claims 1 to 6,
**characterized**
**in that** the reception unit (11) is set up to receive a challenge message (C) with the code (21) associated with one of the N seals (20) and with a checksum from the capture appliance (40),
**in that** the checking unit (12) is set up to check the received code (21) for validity and for the first breakage of the seal (20) associated with the received code and to check the checksum for correctness on the basis of the data record (D1, ..., DN) associated with the associated seal (20), and
**in that** the transmission unit (13) is set up to send a response message (R), generated on the basis of the check on the received code (21) for validity and for the first breakage and on the received checksum for correctness, with the piece of status information to the capture appliance (40).

8. Apparatus according to one of Claims 1 to 7,
**characterized**
**in that** the code (21) comprises a barcode, a QR code, an internet address for the apparatus (10) for managing the plurality N of the seals (20) and/or a piece of access information for the apparatus (10) for managing the plurality N of the seals (20).

9. Apparatus according to one of Claims 1 to 8,
**characterized**
**in that** the transmission unit (13) is set up to add to the response message (R) a product description of the product (30) associated with the received code (21) or a link to a server for providing the product description (30).

10. Apparatus according to one of Claims 1 to 9,
**characterized**
**in that** the apparatus (10) is in the form of an HTTP-compatible server that has a memory (14) for storing the N data records (D1, ..., DN) associated with the N associated seals (20).

11. System having
an apparatus (10) for managing N data records (D1, ..., DN) for N associated seals (20) from products (30) according to one of Claims 1 to 12, wherein the respective seal (20) comprises a code (21) that is associated with the seal (20) and that is capturable by a capture appliance (40) after the seal (20) is broken, and
a number of capture appliances (40) that can be coupled to the apparatus (10) for the purpose of capturing the codes (21) from the N seals (20).

12. Method for managing N data records (D1, ..., DN) for N associated seals (20) from products (30), wherein the respective seal (20) comprises a code that is associated with the seal (20) and that is capturable by a capture appliance (40) after the seal (20) is broken, having the steps of:
reception (301) of a challenge message (C), sent by a capture appliance (40), with a code associated with one of the N seals (20),
checking (302) of the received code (21) for validity and for first breakage of the seal (20) associated with the received code (21) on the basis of the data record (D1, ..., DN) associated with the associated seal (20), and
sending (303) of a response message (R), generated on the basis of the check, with a piece of status information pertaining to the first breakage of the seal (20) associated with the received code (21) to the capture appliance (40),
**characterized**
**in that** the respective data record (D1, ..., DN) for the respective seal (20) comprises a number M of identifications from M authorized capture appliances (40)
wherein the checking unit (12) is set up to check the received code (21) for validity and for the first breakage of the seal (20) associated with the received code (21) and to check consistency between an identity of the capture appliance (40) that is received with the challenge message (C) and the identifications of the authorized capture appliances (40), which identifications are stored in the associated data record (D1, ..., DN).

13. Computer program product that prompts the performance of a method according to Claim 12 on a program-controlled device.

## Revendications

1. Dispositif (10) de gestion de N jeux de données (D1, ..., DN) pour N cachets associés (20) de produits (30), le cachet respectif (20) comprenant un code (21) associé au cachet (20) et pouvant être saisi par un appareil de saisie (40) après la rupture du cachet (20), avec :
- une unité réceptrice (11) pour recevoir un message de requête (C) émis par un appareil de saisie (40) avec un code (21) associé à l'un des N cachets (20) ;
- une unité de contrôle (12) pour contrôler le code reçu (21) quant à sa validité et à une première rupture du cachet (20) associé au code reçu (21) en fonction du jeu de données (D1, ..., DN) associé au cachet associé (20) et
- une unité émettrice (13) pour envoyer à l'appareil de saisie (40) un message de réponse (R), généré en fonction du contrôle, avec une information de statut concernant la première rupture du cachet (20) associé au code reçu (21),
**caractérisé en ce que** le jeu de données respectif (D1, ..., DN) pour le cachet respectif (20) comprend un nombre M d'identifiants de M appareils de saisie autorisés (40), l'unité de contrôle (12) étant configurée pour contrôler le code reçu (21) quant à sa validité et à la première rupture du cachet (20) associé au code reçu (21) et pour comparer une identité de l'appareil de saisie (40), reçue avec le message de requête (C), avec les identifiants des appareils de saisie autorisés (40) sauvegardés dans le jeu de données associé (D1, ..., DN).

2. Dispositif selon la revendication 1, **caractérisé en ce que** l'unité de contrôle (12) est configurée pour actualiser le jeu de données (D1, ..., DN) associé au code reçu (21) en fonction du message de requête reçu (C).

3. Dispositif selon la revendication 1 ou 2, **caractérisé en ce que** le message de requête (C) comprend un horodateur, l'unité de contrôle (12) étant configurée pour ajouter l'horodateur reçu au jeu de données (D1, ..., DN) associé au code reçu (21) pour indiquer un instant de la rupture du cachet associé (20).

4. Dispositif selon l'une des revendications 1 à 3, **caractérisé en ce que** le message de requête (C) comprend un horodateur, l'unité de contrôle (12) étant configurée pour comparer l'horodateur reçu avec une date d'expiration du produit (30) sauvegardée dans le jeu de données associé (D1, ..., DN), l'unité émettrice (13) étant configurée pour émettre un message de réponse (R), généré en fonction du contrôle et de la comparaison, avec l'information de statut concernant la première rupture du cachet (20) associé au code reçu (21) et une information sur la date limite du produit (30) du cachet associé (20).

5. Dispositif selon l'une des revendications 1 à 4, **caractérisé en ce que** le jeu de données respectif (D1, ..., DN) comprend, pour le cachet respectif (20), un témoin d'état qui indique un état non rompu du cachet (20).

6. Dispositif selon la revendication 1, **caractérisé en ce que** l'unité émettrice (13) est configurée pour envoyer à l'appareil de saisie (40) un message de réponse (R), généré en fonction du contrôle et de la comparaison, avec l'information de statut concernant la première rupture du cachet (20) associé au code reçu (21).

7. Dispositif selon l'une des revendications 1 à 6, **caractérisé en ce que** l'unité réceptrice (11) est configurée pour recevoir un message de requête (C) avec le code (21) associé à l'un des N cachets (20) et avec une somme de contrôle de l'appareil de saisie (40), **en ce que** l'unité de contrôle (12) est configurée pour contrôler le code reçu (21) quant à sa validité et à la première rupture du cachet (20) associé au code reçu et la somme de contrôle quant à son exactitude en fonction du jeu de données (D1, ..., DN) associé au cachet associé (20) et **en ce que** l'unité émettrice (13) est configurée pour envoyer à l'appareil de saisie (40) un message de réponse (R), généré en fonction du contrôle du code reçu (21) quant à sa validité et à la première rupture et de la somme de contrôle reçue quant à son exactitude, avec l'information de statut.

8. Dispositif selon l'une des revendications 1 à 7, **caractérisé en ce que** le code (21) est un code-barres un code QR, une adresse Internet du dispositif (10) de gestion de la pluralité N des cachets (20) et/ou une information d'accès pour le dispositif (10) de gestion de la pluralité N des cachets (20).

9. Dispositif selon l'une des revendications 1 à 8, **caractérisé en ce que** l'unité émettrice (13) est configurée pour ajouter au message de réponse (R) une description du produit (30) associé au code reçu (21) ou un lien vers un serveur pour la fourniture de la description du produit (30).

10. Dispositif selon l'une des revendications 1 à 9, **caractérisé en ce que** le dispositif (10) est réalisé en tant que serveur capable de HTTP qui comporte une mémoire (14) pour sauvegarder les N jeux de données (D1, ..., DN) associés aux N cachets associés (20).

11. Système comportant un dispositif (10) de gestion de N jeux de données (D1, ..., DN) pour N cachets associés (20) de produits (30) selon l'une des revendications 1 à 12, le cachet respectif (20) comprenant un code (21) associé au cachet (20) et pouvant être saisi par un appareil de saisie (40) après la rupture du cachet (20), et un nombre d'appareils de saisie (40) pouvant être couplés au dispositif (10) pour la saisie des codes (21) des N cachets (20).

12. Procédé de gestion de N jeux de données (D1, ..., DN) pour N cachets associés (20) de produits (30), le cachet respectif (20) comprenant un code associé au cachet (20) et pouvant être saisi par un appareil de saisie (40) après la rupture du cachet (20), comportant les étapes suivantes :
- réception (301) d'un message de requête (C) émis par un appareil de saisie (40) avec un code associé à l'un des N cachets (20) ;
- contrôle (302) du code reçu (21) quant à sa validité et à une première rupture du cachet (20) associé au code reçu (21) en fonction du jeu de données (D1, ..., DN) associé au cachet associé (20) ;
et
- envoi (303), à l'appareil de saisie (40), d'un message de réponse (R), généré en fonction du contrôle, avec une information de statut concernant la première rupture du cachet (20) associé au code reçu (21),
**caractérisé en ce que** le jeu de données respectif (D1, ..., DN) pour le cachet respectif (20) comprend un nombre M d'identifiants de M appareils de saisie autorisés (40), l'unité de contrôle (12) étant configurée pour contrôler le code reçu (21) quant à sa validité et à la première rupture du cachet (20) associé au code reçu (21) et pour comparer une identité de l'appareil de saisie (40), reçue avec le message de requête (C), avec les identifiants des appareils de saisie autorisés (40) sauvegardés dans le jeu de données associé (D1, ..., DN).

13. Produit de programme informatique faisant exécuter un procédé selon la revendication 12 sur un dispositif commandé par programme.
